# EUROPEAN PATENT APPLICATION

(11) **EP 3 431 259 A1**
(43) Date of publication of application: **23.01.2019**
(21) Application number: 17194865.6
(22) Date of filing: 05.10.2017
(51) Int. Cl.: B29C 64/232, B33Y 30/00

(54) **INTERMITTENT EXCITATION APPARATUS OF 3D PRINTER AND METHOD OF OPERATING THE SAME**

(30) Priority: 20.07.2017 CN 201710595491
(71) Applicant: XYZprinting, Inc., New Taipei City 22201 (TW); Kinpo Electronics, Inc., New Taipei City 22201 (TW)
(72) Inventor: Ho, Kwan, 22201 New Taipei City (TW); Huang, Chien-Ying, 22201 New Taipei City (TW); Chang, Chih-Ming, 22201 New Taipei City (TW); Lee, Chih-Hao, 22201 New Taipei City (TW); Teng, Hung-Tang, 22201 New Taipei City (TW); Yang, Chung-Chih, 22201 New Taipei City (TW); Hsieh, Chi-Wen, 22201 New Taipei City (TW)
(74) Representative: Patentanwälte Bals & Vogel

(57) **Abstract**

An intermittent excitation apparatus of a 3D printer includes at least one guide (21A, 21B), a drive rod (22), a movable seat (23Z), and a microcontroller (10). When the microcontroller (10) controls a first motor in a non-excitation and non-rotation condition, the movable seat (23Z) is fixed on the drive rod (22) and the 3D printer performs a plane printing operation. When the microcontroller (10) controls the first motor in an excitation and rotation condition, the movable seat (23Z) moves along the drive rod (22). Therefore, it is to significantly reduce heat generated inside the first motor, decrease costs, and reduce the size of the 3D printer.

## Description

### BACKGROUND OF THE INVENTION

### 1. Technical Field

The present disclosure relates to an excitation apparatus of a three dimensional (3D) printer and a method of operating the same, and more particularly to an intermittent excitation apparatus of a 3D printer and a method of operating the same.

### 2. Description of Related Art

When the 3D printer is in a printing operation, it often needs to spend a few hours printing an object to be printed from the beginning to the end of the printing operation. For a motor which is used to drive a three-axis movable mechanism including an X-axis movable mechanism, a Y-axis movable mechanism, and a Z-axis movable mechanism, the rise in temperature caused by accumulated heat would be a severe test for the 3D printer operating over a long time period. The temperature of the motor is usually close to a summed temperature by an ambient temperature and a temperature at which the motor is rotating. Especially in the high ambient temperature, the temperature of the motor is easy too high resulting in the motor in failure. Seriously, it would cause the motor to burn due to a short circuit of internal coils thereof and cause equipment costs to rise and damage the operators.

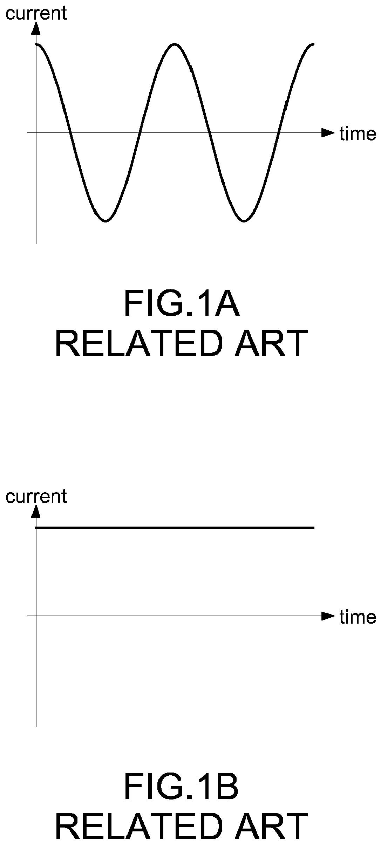

During the X-Y plane printing operation of the 3D printer, an X-axis motor and a Y-axis motor used to respectively drive the X-axis movable mechanism and the Y-axis movable mechanism are controlled in an excitation and rotation condition since only the X-axis movable mechanism and the Y-axis movable mechanism move but the Z-axis movable mechanism is fixed. Also, a current waveform of the X-axis motor and the Y-axis motor which are operated in the excitation and rotation condition may be shown in FIG. 1A.

For a Z-axis motor used to drive the Z-axis movable mechanism, similarly, the Z-axis motor is controlled in the excitation and rotation condition when the Z-axis movable mechanism is driven by the X-axis motor to perform a raising operation. In particular, the Z-axis movable mechanism is a collective term to represent upwardly and downwardly movable integral parts. Moreover, a print head of the 3D printer is installed on the Z-axis movable mechanism. Also, a current waveform of the Z-axis motor which is operated in the excitation and rotation condition may be shown in FIG. 1A. For any one of the motors having an A-phase coil and a B-phase coil, a sinusoidal excitation current flows through the A-phase coil or the B-phase coil may be shown in FIG. 1A when it is operated in the excitation and rotation condition. Therefore, the heat generated inside the motor is directly related to a root-mean-square (RMS) value of the sinusoidal excitation current flowing through the coils of the motor.

Unlike the excitation and rotation condition of the X-axis motor, Y-axis motor, and the Z-axis motor, the Z-axis motor is operated in an excitation and non-rotation condition when the X-axis movable mechanism and/or the Y-axis movable mechanism perform the plane printing operation but the Z-axis movable mechanism is fixed. In the excitation and non-rotation condition, the A-phase coil and the B-phase coil of the Z-axis motor are both excited so that an excitation current thereof may be shown in FIG. 1B. In other words, the A-phase coil and the B-phase coil of the Z-axis motor are excited by a direct current (DC) excitation current, that is the DC excitation current flows through the coils of the Z-axis motor. Therefore, the heat generated inside the motor is directly related to a value of the DC excitation current flowing through the coils of the motor. Accordingly, a holding torque is generated by the DC excitation current flowing through the coils of the motor to tightly hold (lock) the Z-axis movable mechanism on the same height while the X-axis movable mechanism and/or the Y-axis movable mechanism perform the plane printing operation. In particular, the excitation and non-rotation condition of the Z-axis motor is converted to the excitation and rotation condition when the plane printing operation on the present layer is completed by the X-axis motor and the Y-axis motor and ready to the next layer.

As obviously shown in FIG. 1B and FIG. 1A, the DC excitation current flowing through the coils of the Z-axis motor which is operated in the raising operation, namely the excitation and non-rotation condition as shown in FIG. 1B is much larger than the sinusoidal excitation current flowing through the coils of the Z-axis motor which is operated in the excitation and rotation condition as shown in FIG. 1A.

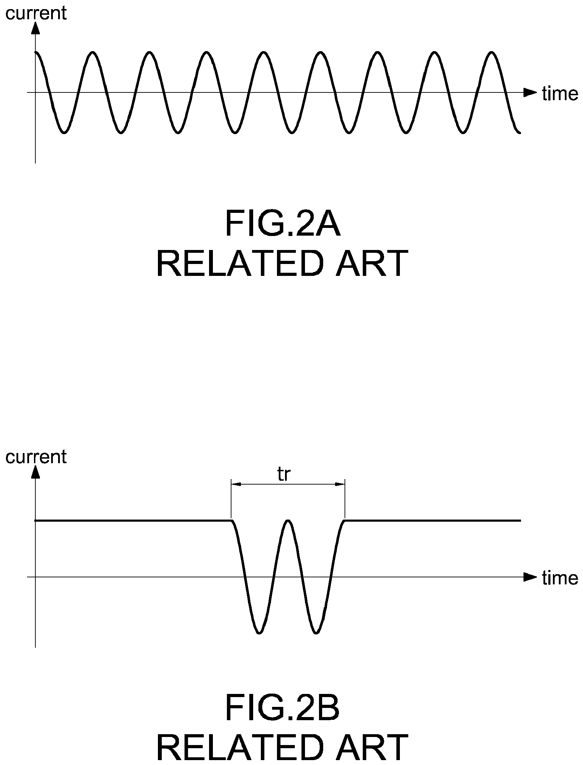

Refer to FIG. 2A and FIG. 2B, wherein FIG. 2A shows a current waveform of an X-axis motor and/or a Y-axis motor in the related art, and FIG. 2B shows a current waveform of a Z-axis motor in the related art. As shown in FIG. 2A, the coils of the X-axis motor and the Y-axis motor are continuously excited since the X-axis motor and the Y-axis motor are driven for the plane printing operation, that is the coils of the X-axis motor and the Y-axis motor are excited by the sinusoidal excitation current.

When the Z-axis movable mechanism performs the raising operation in a raising time tr, the coil of the Z-axis motor is excited by the sinusoidal excitation current so that the Z-axis movable mechanism can be unfixed to move. In addition, the coil of the Z-axis motor is excited by the DC excitation current when the Z-axis movable mechanism is fixed on the same height outside of the raising time tr.

In summary, the current flowing through the coil of the Z-axis motor operated in the excitation and non-rotation condition is much larger the current flowing through the coil of the Z-axis motor operated in the excitation and rotation condition. In addition, the temperature of the Z-axis motor rises due to the heat accumulated in the Z-axis motor during the long-time printing operation since a time length of the excitation and non-rotation condition is much larger than a time length of the excitation and rotation condition.

In order to improve the problem of the high temperature of the Z-axis motor during the long-time printing operation, the system developers would usually install the Z-axis motor on a large-area of iron plate or install additional heat sinks on the Z-axis motor to achieve a certain degree of cooling effect for the Z-axis motor. However, it is to limit and decrease flexibility of mechanism designs, increase equipment costs, and increase the size of the whole machine due to larger occupied space and volume.

### SUMMARY OF THE INVENTION

An objective of the present disclosure is to provide an intermittent excitation apparatus of a three dimensional (3D) printer to solve problems of the motor in failure due to too-high temperature of the motor, the motor to burn due to a short circuit of internal coils thereof, and the decreased flexibility of mechanism designs, increased equipment costs, and increased the size of the whole machine due to larger occupied space and volume.

In order to achieve the above-mentioned objective, the intermittent excitation apparatus with a base of the 3D printer includes at least one guide, a drive rod, a movable seat, and a microcontroller. The at least one guide is correspondingly disposed on the base and extends in a first direction. The drive rod is disposed on the base and in parallel to the at least one guide, and the drive rod is driven by a first motor. The movable seat has a print head, and the movable seat is disposed on the drive rod; the first motor drives the drive rod to drive the movable set moving in the first direction. The microcontroller is coupled to the first motor. When the microcontroller controls the first motor in a non-excitation and non-rotation condition, the movable seat is fixed on the drive rod and the three dimensional printer performs a plane printing operation; when the microcontroller controls the first motor in an excitation and rotation condition, the movable seat moves in the first direction.

The intermittent excitation apparatus of the 3D printer is provided to prevent the motor in failure due to too-high temperature of the motor, prevent the motor to burn due to a short circuit of internal coils thereof, and eliminate installing additional heat sinks on the Z-axis motor or eliminate installing the Z-axis motor on a large-area of iron plate so as to increase flexibility of mechanism designs, reduce equipment costs, and reduce the size of the whole machine due to smaller occupied space and volume.

Another objective of the present disclosure is to provide an intermittent excitation apparatus of a three dimensional (3D) printer to solve problems of the motor in failure due to too-high temperature of the motor, the motor to burn due to a short circuit of internal coils thereof, and the decreased flexibility of mechanism designs, increased equipment costs, and increased the size of the whole machine due to larger occupied space and volume.

In order to achieve the above-mentioned objective, the method of operating an intermittent excitation apparatus of a three dimensional printer providing a microcontroller to control excitation of a Z-axis motor, the method of operating the intermittent excitation apparatus comprising steps of: reading print information by the microcontroller; determining whether a Z-axis layer changes by the microcontroller according to the print information; exciting the Z-axis motor by the microcontroller when the Z-axis layer changes; and controlling a raising operation of the Z-axis motor by the microcontroller.

The method of operating the intermittent excitation apparatus of the 3D printer is provided to prevent the motor in failure due to too-high temperature of the motor, prevent the motor to burn due to a short circuit of internal coils thereof, and eliminate installing additional heat sinks on the Z-axis motor or eliminate installing the Z-axis motor on a large-area of iron plate so as to increase flexibility of mechanism designs, reduce equipment costs, and reduce the size of the whole machine due to smaller occupied space and volume.

It is to be understood that both the foregoing general description and the following detailed description are exemplary, and are intended to provide further explanation of the present disclosure as claimed. Other advantages and features of the present disclosure will be apparent from the following description, drawings and claims.

### BRIEF DESCRIPTION OF DRAWING

The present disclosure can be more fully understood by reading the following detailed description of the embodiment, with reference made to the accompanying drawings as follows:
FIG. 1A shows a current waveform of a motor which is operated in an excitation and rotation condition in the related art.
FIG. 1B shows a current waveform of the motor which is operated in an excitation and non-rotation condition in the related art.
FIG. 2A shows a current waveform of an X-axis motor and/or a Y-axis motor in the related art.
FIG. 2B shows a current waveform of a Z-axis motor in the related art.
FIG. 3 shows a schematic block diagram of a control architecture of an intermittent excitation apparatus of a three dimensional (3D) printer according to the present disclosure.
FIG. 4 shows a perspective view of the intermittent excitation apparatus according to a first embodiment of the present disclosure.
FIG. 5A shows a current waveform of a motor which is operated in an excitation and rotation condition according to the present disclosure.
FIG. 5B shows a current waveform of the motor which is operated in a non-excitation and non-rotation condition according to the present disclosure.
FIG. 6A shows a current waveform of the X-axis motor and/or the Y-axis motor according to the present disclosure.
FIG. 6B shows a current waveform of the Z-axis motor according to the present disclosure.
FIG. 6C shows a current waveform between the Z-axis motor in the related art and the Z-axis motor according to the present disclosure.
FIG. 7 shows a flowchart of a method of operating an intermittent excitation apparatus of a 3D printer according to the present disclosure.

### DETAILED DESCRIPTION

Reference will now be made to the drawing figures to describe the present disclosure in detail. It will be understood that the drawing figures and exemplified embodiments of present disclosure are not limited to the details thereof.

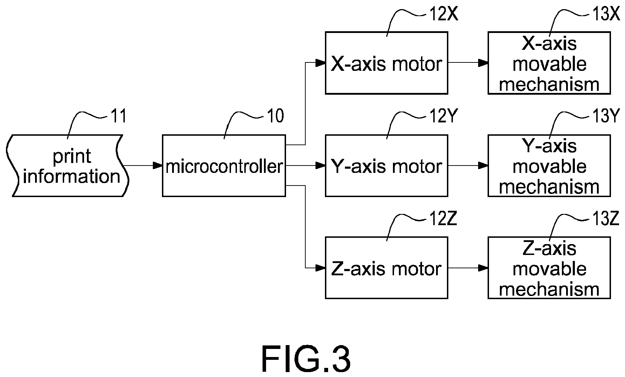

Refer to FIG. 3, which shows a schematic block diagram of a control architecture of an intermittent excitation apparatus of a three dimensional (3D) printer according to the present disclosure. The control architecture of the intermittent excitation apparatus mainly includes a microcontroller 10, and the microcontroller 10 externally receives or reads print information 11. For the fused deposition modeling (FDM), the print information 11 may be, but not limited to, commands in a G-code file (hereinafter referred to as "G-code commands"). For the stereolithography (SLA), the print information 11 may be, but not limited to, model information in an image file. However, the above-mentioned examples are for demonstration and not for limitation of the present disclosure.

The microcontroller 10 is directly or indirectly coupled to a plurality of motors which drive the corresponding movable mechanisms. For a three-axis control, the microcontroller 10 is directly or indirectly coupled to an X-axis motor 12X, a Y-axis motor 12Y, and a Z-axis motor 12Z. In this embodiment, each motor may be, but not limited to, a stepper motor or a servo motor. The X-axis motor 12X is used to correspondingly drive a movable mechanism, namely an X-axis movable mechanism 13X, the Y-axis motor 12Y is used to correspondingly drive a movable mechanism, namely a Y-axis movable mechanism 13Y, and the Z-axis motor 12Z is used to correspondingly drive a movable mechanism, namely a Z-axis movable mechanism 13Z. In particular, the control signal provided from the microcontroller 10 to control the drive circuit for driving the motors is omitted here to simplify and focus on the technical features of the present disclosure.

The microcontroller 10 controls the X-axis motor 12X and the Y-axis motor 12Y to correspondingly drive the X-axis movable mechanism 13X and the Y-axis movable mechanism 13Y to perform a plane printing operation according to the received or read print information. More specifically, the microcontroller 10 controls the Z-axis motor 12Z to perform a fixed operation or a raising operation according to the print information 11. The raising operation means that the Z-axis movable mechanism 13Z is tightly fixed to maintain the same height while the X-axis movable mechanism 13X and/or the Y-axis movable mechanism 13Y perform the plane printing operation on the present layer. After the plane printing operation on the present layer is completed, the Z-axis movable mechanism 13Z is driven to raise to the next layer for the next plane printing operation.

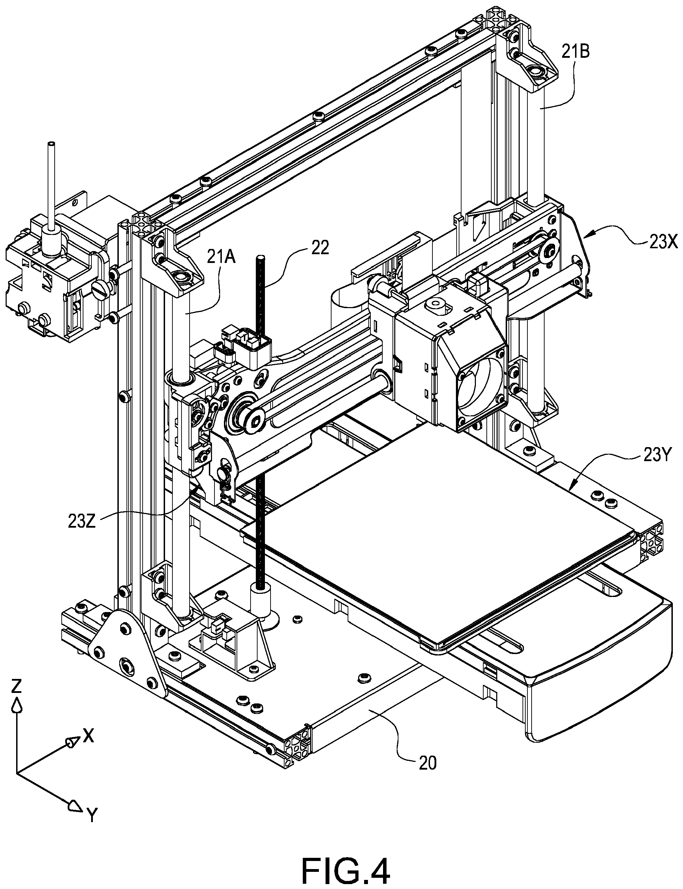

Refer to FIG. 4, which shows a perspective view of an intermittent excitation apparatus according to a first embodiment of the present disclosure. The intermittent excitation apparatus of the 3D printer (hereinafter referred to as "intermittent excitation apparatus") has a base 20, and the base 20 is provided for a part of components or devices of the 3D printer mounting. In addition, the intermittent excitation apparatus mainly includes at least one guide 21A, 21B, a drive rod 22, at least one plane movable mechanism 23X, 23Y , a movable seat 23Z, and a microcontroller 10 shown in FIG. 3.

For two guides 21A, 21B, the two guides 21A, 21B are correspondingly mounted on two opposite sides of the base 20 and extending in a first direction. In this embodiment, the first direction is an X-axis direction shown in FIG. 4 and that is perpendicular to an upper surface (or a lower surface) of the base 20.

In this embodiment, the drive rod 22 is a screw, such as a pitch screw or a ball screw. The drive rod 22 and the two guides 21A, 21B which are parallel with the drive rod 22 are disposed on the base 20 in the first direction. More specifically, the drive rod 22 is arranged in parallel with and between the two guides 21A, 21B and extends in the X-axis direction.

In this embodiment, the at least one plane movable mechanism 23X, 23Y is an X-axis movable mechanism 13X and a Y-axis movable mechanism 13Y as shown in FIG. 3. Each plane movable mechanism 23X, 23Y is correspondingly driven by a second motor. The second motor may be the X-axis motor 12X shown in FIG. 3, and the second motor may be also the Y-axis motor 12Y shown in FIG. 3. The at least one plane movable mechanism 23X, 23Y, namely the X-axis movable mechanism 13X and the Y-axis movable mechanism 13Y are respectively driven by the X-axis motor 12X and the Y-axis motor 12Y to provide movements on a plane formed in a second direction and a third direction which is perpendicular to the second direction. In this embodiment, the second direction is an X-axis direction and the third direction is a Y-axis direction shown in FIG. 4. In particular, the first direction (Z-axis direction), the second direction (X-axis direction), and the third direction (Y-axis direction) are different and perpendicular to one another.

In this embodiment, the movable seat 23Z is the Z-axis movable mechanism 13Z shown in FIG. 3. A print head is installed on the movable seat 23Z and the movable seat 23Z is installed on the drive rod 22. The drive rod 22 is driven by a first motor, and the first motor is the Z-axis motor 12Z shown in FIG. 3 used to drive the Z-axis movable mechanism 13Z so that the movable seat 23Z, namely the Z-axis movable mechanism 13Z moves along the drive rod 22 in the first direction.

The microcontroller 10 further reads print information. For the fused deposition modeling (FDM), the print information 11 may be, but not limited to, commands in a G-code file (hereinafter referred to as "G-code commands"). For the stereolithography (SLA), the print information 11 may be, but not limited to, model information in an image file. The microcontroller 10 controls the at least one second motor (including the X-axis motor 12X and the Y-axis motor 12Y) and the first motor, namely the Z-axis motor 12Z according to the print information 11.

When the microcontroller 10 controls the X-axis motor 12X and the Y-axis motor 12Y in the excitation and rotation condition and also controls the Z-axis motor 12Z in the non-excitation and non-rotation condition according to the print information 11, the Z-axis movable mechanism 13Z, namely the movable seat 23Z is fixed on the drive rod 22 and also the X-axis movable mechanism 13X and/or the Y-axis movable mechanism 13Y perform the plane printing operation.

Since the Z-axis movable mechanism 13Z (such as a screw) is installed on the drive rod 22 and a non-free end of the drive rod 22 is connected to the Z-axis motor 12Z, the non-free end of the drive rod 22 is driven by the Z-axis motor 12Z to convert a rotary motion into a linear motion so that the Z-axis movable mechanism 13Z moves along the drive rod 22 in the first direction. In particular, the drive rod 22 is used in the 3D printer for providing the raising operation of the Z-axis movable mechanism 13Z.

During the plane printing operation of the X-axis movable mechanism 13X and/or the Y-axis movable mechanism 13Y, the Z-axis movable mechanism 13Z does not fall down due to the gravity since the Z-axis movable mechanism 13Z is fixed on the drive rod 22. Therefore, the Z-axis motor 12Z which is used to drive the Z-axis movable mechanism 13Z can be controlled in the non-excitation and non-rotation condition and tightly fixed on the same height by the drive rod 22 (such as the screw) when the X-axis movable mechanism 13X and/or the Y-axis movable mechanism 13Y continuously perform the printing operation. For the screw being as the drive rod 22, threads of the screw match to the Z-axis movable mechanism 13Z so that the Z-axis movable mechanism 13Z with the print head can be fixed and not affected by gravity on the same height to perform the plane printing operation on the present layer.

When the microcontroller 10 controls the Z-axis motor 12Z in the excitation and rotation condition according to the print information, the Z-axis movable mechanism 13Z, namely the movable seat 23Z raises along the drive rod 22 in the first direction. In other words, after the X-axis movable mechanism 13X and/or the Y-axis movable mechanism 13Y complete the plane printing operation on the present layer, it needs to raise the Z-axis movable mechanism 13Z to the next layer for the next plane printing operation. Therefore, the Z-axis motor 12Z is controlled in the excitation and rotation condition so as to drive the drive rod 22 to raise the Z-axis movable mechanism 13Z to the next layer for the next plane printing operation performed by the X-axis movable mechanism 13X and/or the Y-axis movable mechanism 13Y. In addition, when the Z-axis movable mechanism 13Z reaches the next layer, the microcontroller 10 controls the Z-axis motor 12Z in the non-excitation and non-rotation condition so that the Z-axis movable mechanism 13Z is fixed on the drive rod 22 to complete the raising operation and ready to perform the plane printing operation on the present layer.

Besides the screw being as the drive rod 22, a rack or a belt may can be as the drive rod 22. The rack or the belt is driven by the Z-axis motor 12Z to make the Z-axis movable mechanism 13Z move up or down along the rack or the belt. For the rack or the belt being as the drive rod 22, pitches of the rack or grooves of the belt matches to the Z-axis movable mechanism 13Z so that the Z-axis movable mechanism 13Z with the print head can be fixed and not affected by gravity on the same height to perform the plane printing operation on the present layer. In addition, other simple machinery coordinated with electromagnetic valves can be provided to hold or fix the Z-axis movable mechanism 13Z on the same height without using the drive rod 22.

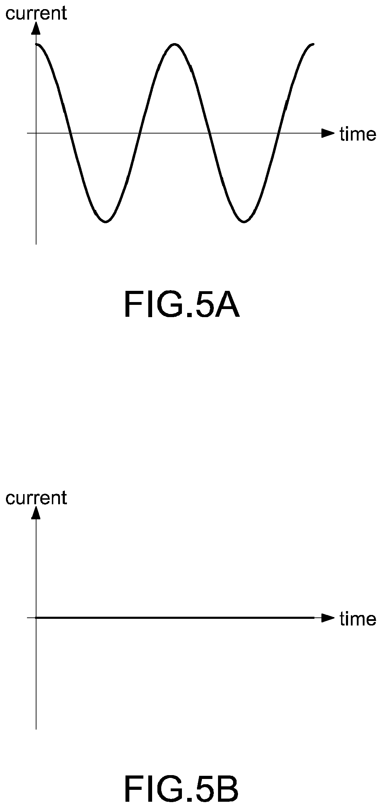

Refer to FIG. 5A and FIG. 5B, wherein FIG. 5A shows a current waveform of a motor which is operated in an excitation and rotation condition according to the present disclosure, and FIG. 5B shows a current waveform of the motor which is operated in a non-excitation and non-rotation condition according to the present disclosure. During the X-Y plane printing operation, the microcontroller 10 controls the X-axis motor 12X and the Y-axis motor 12Y in the excitation and rotation condition since only the X-axis movable mechanism 13X and/or the Y-axis movable mechanism 13Y perform the plane printing operation but the Z-axis movable mechanism 13Z is fixed on the drive rod 22. Also, the current waveform of the X-axis motor 12X and/or the Y-axis motor 12Y which are operated in the excitation and rotation condition may be shown in FIG. 5A.

Similarly, when the Z-axis motor 12Z is used for the raising operation, the microcontroller 10 controls the Z-axis motor 12Z in the excitation and rotation condition so that the Z-axis motor 12Z drives the drive rod 22 to raise the Z-axis movable mechanism 13Z. At this time, the current waveform of the Z-axis motor 12Z which is operated in the excitation and rotation condition may be shown in FIG. 5A. For any one of the motors having an A-phase coil and a B-phase coil, a sinusoidal excitation current flows through the A-phase coil or the B-phase coil may be shown in FIG. 5A when it is operated in the excitation and rotation condition.

Unlike the excitation and rotation condition of the X-axis motor 12X, Y-axis motor 12Y, and the Z-axis motor 12Z, the Z-axis motor 12Z is operated in the non-excitation and non-rotation condition when the X-axis movable mechanism 13X and/or the Y-axis movable mechanism 13Y perform the plane printing operation but the Z-axis movable mechanism 13Z is fixed on the same height of the drive rod 22. In the non-excitation and non-rotation condition, an A-phase coil or a B-phase coil of the Z-axis motor 12Z is not excited so that an excitation current thereof is zero, and the current waveform of the Z-axis motor 12Z which is operated in the non-excitation and non-rotation condition may be shown in FIG. 5B. In other words, the non-excitation and non-rotation condition of the Z-axis motor 12Z is converted to the excitation and rotation condition when the plane printing operation on the present layer is completed by the X-axis motor 12X and the Y-axis motor 12Y and ready to the next layer.

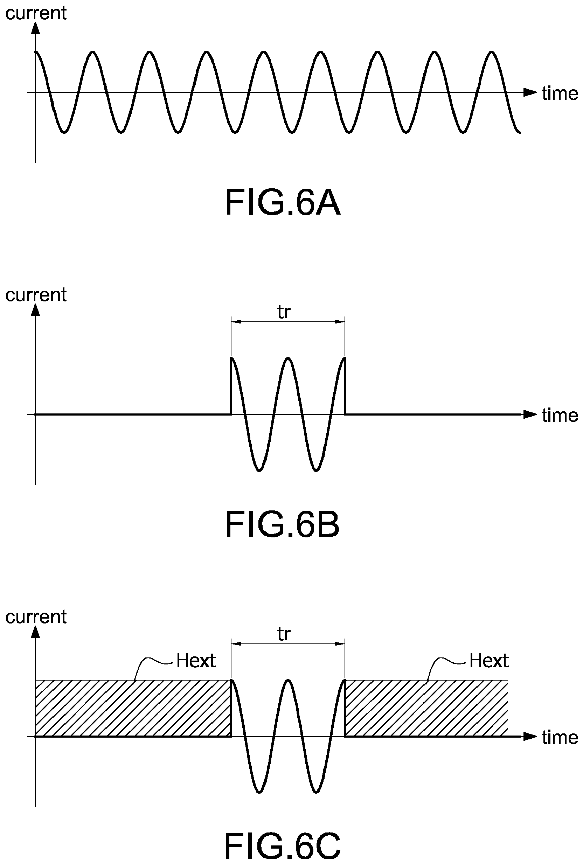

Refer to FIG. 6A and FIG. 6B, wherein FIG. 6A shows a current waveform of the X-axis motor and/or the Y-axis motor according to the present disclosure, and FIG. 6B shows a current waveform of the Z-axis motor according to the present disclosure. As shown in FIG. 6A, since the X-axis movable mechanism 13X and/or the Y-axis movable mechanism 13Y are provided for the X-Y plane printing operation, the X-axis motor 12X and the Y-axis motor 12Y which are used to respectively drive the X-axis movable mechanism 13X and the Y-axis movable mechanism 13Y keep in the excitation and rotation condition, that is sinusoidal excitation currents flow through the coil of the X-axis motor 12X and the coil of the Y-axis motor 12Y.

When the Z-axis movable mechanism 13Z performs the raising operation in a raising time tr, the coil of the Z-axis motor 12Z is excited by the sinusoidal excitation current so that the Z-axis movable mechanism 13Z can be unfixed to move. In addition, the Z-axis movable mechanism 13Z does not perform the raising operation and coils of the Z-axis motor 12Z are not excited outside of the raising time tr. Therefore, the Z-axis movable mechanism 13Z, namely the movable seat 23Z is fixed on the drive rod 22 and the X-axis movable mechanism 13X and/or the Y-axis movable mechanism 13Y perform the plane printing operation. As shown in FIG. 2B, the Z-axis movable mechanism in the related art does not perform the raising operation outside of the raising time tr but coils of the Z-axis motor are excited. Obviously, the excitation current flowing through the coils of the Z-axis motor outside of the raising time tr is quite large and it persists over a long time period. On the contrary, the Z-axis movable mechanism 13Z in the present disclosure does not perform the raising operation outside of the raising time tr and coils of the Z-axis motor 12Z are not excited. Obviously, the current flowing through the coils of the Z-axis motor 12Z outside of the raising time tr is zero (also called no excitation current) as shown in FIG. 6B. In other words, the coils of the Z-axis motor 12Z are excited by the sinusoidal excitation current only during the raising time tr, and therefore it is referred to as "intermittent excitation". Accordingly, the intermittent excitation apparatus is provided to significantly reduce heat generated inside the Z-axis motor 12Z due to the excitation current flowing through the coils of the Z-axis motor when the Z-axis motor 12Z does not perform the raising operation outside of the raising time tr.

Refer to FIG. 6C, which shows a current waveform between the Z-axis motor in the related art and the Z-axis motor according to the present disclosure. According to the comparison between FIG. 2B and FIG. 6B, the slash area illustrated in FIG. 6C shows the difference between the excitation current shown in FIG. 2B and the no excitation current shown in FIG. 6B outside of the raising time tr, and therefore extra heat Hext is produced by the extra current. In other words, the extra heat Hext produced outside of the raising time tr can be significantly reduced when the Z-axis motor 12Z is operated in the non-excitation and non-rotation condition in the present disclosure rather than the Z-axis motor is operated in the excitation and non-rotation condition in the related art. Accordingly, it is possible to eliminate installing additional heat sinks on the Z-axis motor Z12 so as to increase flexibility of mechanism designs, reduce equipment costs, and reduce the size of the whole machine due to less occupied space and volume.

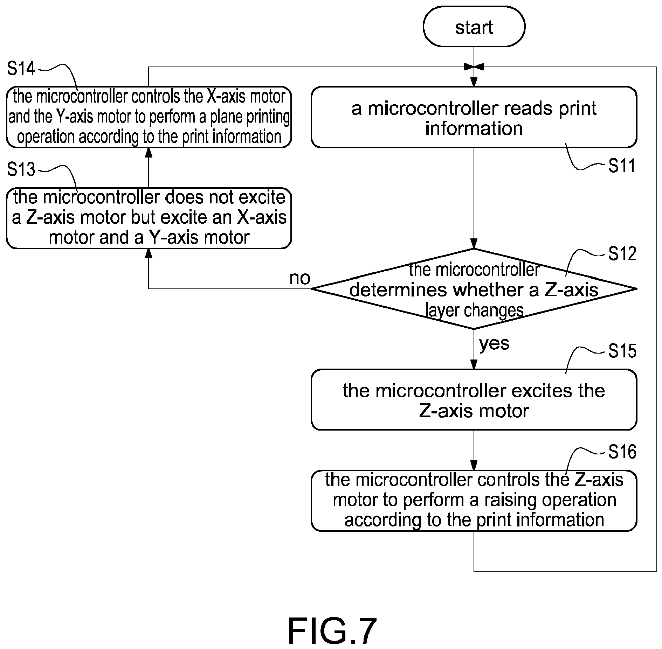

Refer to FIG. 7, which shows flowchart of a method of operating an intermittent excitation apparatus of a 3D printer according to the present disclosure. For convenience and clarity, the above-mentioned three movable mechanisms of the 3D printer are directly expressed by an X-axis movable mechanism, a Y-axis movable mechanism, and a Z-axis movable mechanism, that is structures of the movable mechanisms such as guide rails, guide blocks, and so on may be ignored. In addition, the detail descriptions of the 3D printer can be found in the foregoing and omitted here for conciseness.

The method of operating the intermittent excitation apparatus of the 3D printer includes following steps. After the 3D printer is powered on and home positions of three axes thereof are initialized, a microcontroller is used to provide at least one signal of speed and rotation requirements to a driver or a drive circuit. The driver or the drive circuit is used to drive the motors according to the at least one signal of speed and rotation requirements.

First, the microcontroller reads print information of a 3D model slicing after the initialization of the 3D printer is completed and a printing preparation is ready (S11). For the fused deposition modeling (FDM), the print information 11 may be, but not limited to, commands in a G-code file (hereinafter referred to as "G-code commands"). For the stereolithography (SLA), the print information 11 may be, but not limited to, model information in an image file. In this example, the G-code commands are exemplified for further demonstration, that is the print information in the step (S11) is the G-code commands.

Afterward, the microcontroller determines whether a Z-axis layer changes according to the G-code commands (S12). In other words, the microcontroller determines whether a layer change command corresponding to a raising operation of a Z-axis mechanism is read in the G-code commands. If the Z-axis layer does not change, the microcontroller does not excite coils of the Z-axis motor but excite coils of the X-axis motor and coils of the Y-axis motor (S13). Also, a current waveform of coils of the X-axis motor and the Y-axis motor which are excited may be shown in FIG. 5A, and a current waveform of coils of the Z-axis motor which are not excited may be shown in FIG. 5B.

Afterward, the microcontroller controls the X-axis motor and the Y-axis motor to perform a plane printing operation according to the print information (S14). After the printing preparation is ready, the printing operation usually starts from a first layer of the 3D model slicing, and therefore the microcontroller does not read the layer change command so that the X-axis motor and the Y-axis motor correspondingly control the X-axis movable mechanism and the Y-axis movable mechanism to perform the plane printing operation on the first layer. Afterward, the microcontroller continuously reads the print information (S11) and determines whether the Z-axis layer changes (S12). During the plane printing operation on the first layer, the step (S11), the step (S12), the step (S13), the step (S14) are sequentially executed and the step (S11) is executed again. In other words, if the Z-axis layer does not change, only the X-axis movable mechanism and/or the Y-axis movable mechanism are driven to perform the plane printing operation on the present layer according to printing control commands in the G-code commands in the step (S11). Therefore, the X-axis movable mechanism and/or the Y-axis movable mechanism perform the plane printing operation on the present layer according to the printing control commands the in the step (S14).

When the microcontroller determines that the Z-axis layer changes according to the G-code commands that is the microcontroller reads the layer change command in the G-code commands in the step (S12), it means that the Z-axis movable mechanism needs to perform the raising operation. Therefore, the microcontroller excites the coils of the Z-axis motor (S15), that is the microcontroller provides an excitation control signal to the Z-axis motor and the coils of the Z-axis motor are excited according to the excitation control signal. Afterward, the microcontroller controls the Z-axis motor to drive the Z-axis movable mechanism to perform the raising operation according to a raising control command in the G-code commands (S16). In other words, the Z-axis motor is in the excitation and rotation condition in the step (S15) and the step (S16), and it is different from that the Z-axis motor is in the non-excitation and non-rotation condition in the step (S14) and that the Z-axis motor is in the excitation and non-rotation condition in the related art.

After the raising operation of the Z-axis movable mechanism, namely the Z-axis movable mechanism moves (raises) from the Nth layer to the (N+1)th layer, the step (S11) is executed again, namely the microcontroller reads the print information of the 3D model slicing. After the 3D printer activates printing, the X-axis motor and the Y-axis motor are continuously operated in the excitation and rotation condition as shown in FIG. 6A. In particular, the difference between the step (S16) and the step (S13) is that the coils of the Z-axis motor need to be excited during the raising time tr shown in FIG. 6B in the former and the coils of the Z-axis motor need not to be excited outside of the raising time tr shown in FIG. 6B in the latter.

After the step (S11) is completed, the step (S12) and other subsequent steps are executed. In addition, the detail descriptions of other steps can be found in the foregoing and omitted here for conciseness. Moreover, the microcontroller may further determine whether a printing complete command is read in the G-code commands after the step (S11). If the printing complete command is read, the printing operation of the 3D printer is completely finished. On the contrary, subsequent steps are executed until the printing operation of the 3D printer is completely finished.

In conclusion, the present disclosure has following features and advantages:
1. The drive rod, such as the screw, the rack, or the belt is used to match the Z-axis movable mechanism so that the Z-axis movable mechanism with the print head can be fixed and not affected by gravity on the same height to perform the plane printing operation.
2. The intermittent excitation manner for the Z-axis motor is implemented to significantly reduce heat generated inside the Z-axis motor in the long-time printing operation.
3. The intermittent excitation manner for the Z-axis motor is implemented to eliminate installing additional heat sinks on the Z-axis motor or eliminate installing the Z-axis motor on a large-area of iron plate so as to increase flexibility of mechanism designs, reduce equipment costs, and reduce the size of the whole machine due to smaller occupied space and volume.

## Claims

1. An intermittent excitation apparatus of a three dimensional printer, **characterized in that** the intermittent excitation apparatus with a base (20) comprising:
at least one guide (21A, 21B) correspondingly disposed on the base (20) and extending in a first direction;
a drive rod (22) disposed on the base (20) and in parallel to the at least one guide (21A, 21B), and the drive rod (22) driven by a first motor;
a movable seat (23Z) having a print head, and the movable seat (23Z) disposed on the drive rod (22); the first motor configured to drive the drive rod (22) to drive the movable set (23Z) moving in the first direction; and
a microcontroller (10) coupled to the first motor;
wherein when the microcontroller (10) is configured to control the first motor in a non-excitation and non-rotation condition, the movable seat (23Z) is fixed on the drive rod (22) and the three dimensional printer is configured to perform a plane printing operation; when the microcontroller (10) is configured to control the first motor in an excitation and rotation condition, the movable seat (23Z) moves in the first direction.

2. The intermittent excitation apparatus in claim 1, wherein the drive rod (22) is a screw, a rack, or a belt.

3. The intermittent excitation apparatus in claim 1, wherein when the movable seat (23Z) completes moving along the drive rod (22) in the first direction and the first motor is controlled in the non-excitation and non-rotation condition, the movable set (23Z) is fixed on the drive rod (22).

4. The intermittent excitation apparatus in claim 1, further comprising:
at least one plane movable mechanism (23X, 23Y) correspondingly driven by at least one second motor to provide movements on a plane formed in a second direction and a third direction perpendicular to the second direction, wherein the second direction, the third direction, and the first direction are different and perpendicular to one another.

5. The intermittent excitation apparatus in claim 4, wherein the microcontroller (10) is configured to read print information (11), and the microcontroller (10) is configured to control the first motor and the at least one second motor according to the print information (11), wherein the microcontroller (11) is coupled to the at least one second motor.

6. The intermittent excitation apparatus in claim 5, wherein the print information (11) is G-code information or image information.

7. The intermittent excitation apparatus in claim 4, wherein the at least one plane movable mechanism (23X, 23Y) is an X-axis movable mechanism (13X) and a Y-axis movable mechanism (13Y), and the movable seat is a Z-axis movable mechanism (13Z).

8. A method of operating an intermittent excitation apparatus of a three dimensional printer providing a microcontroller (10) to control excitation of a Z-axis motor (12), **characterized in that** the method of operating the intermittent excitation apparatus comprising steps of:
reading print information (11) by the microcontroller (10);
determining whether a Z-axis layer changes by the microcontroller (10) according to the print information (11);
exciting the Z-axis motor (12Z) by the microcontroller (10) when the Z-axis layer changes; and
controlling a raising operation of the Z-axis motor (12Z) by the microcontroller (10).

9. The method of operating the intermittent excitation apparatus in claim 8, wherein after the step of determining whether the Z-axis layer changes comprises steps of:
without exciting the Z-axis motor (12Z) but exciting an X-axis motor (12X) and a Y-axis motor (12Y) by the microcontroller (10) when the Z-axis layer does not change; and
controlling the X-axis motor (12X) and the Y-axis motor (12Y) to perform a printing operation by the microcontroller (10) according to the print information (11).

10. The method of operating the intermittent excitation apparatus in claim 8, wherein the microcontroller (10) is configured to control the Z-axis motor (12Z) to drive a drive rod (22) to perform a raising operation of a Z-axis movable mechanism (13Z).

11. The method of operating the intermittent excitation apparatus in claim 10, wherein the drive rod (22) is a screw, a rack, or a belt.
